**Europäisches Patentamt**

(19) **European Patent Office**

**Office européen des brevets**

(11) Publication number : **0 336 940 B1**

(12) # EUROPEAN PATENT SPECIFICATION

(45) Date of publication of patent specification :
**09.09.92 Bulletin 92/37**

(51) Int. Cl.$^5$ : **B64F 1/32,** B64D 9/00,
B65G 67/08

(21) Application number : **88908316.8**

(22) Date of filing : **23.09.88**

(86) International application number :
**PCT/IT88/00067**

(87) International publication number :
**WO 89/02852 06.04.89 Gazette 89/08**

(54) **DEVICE TO FACILITATE THE LOADING AND UNLOADING OF PASSENGERS LUGGAGE INTO AIRCRAFT HOLDS.**

(30) Priority : **25.09.87 IT 4842387**

(43) Date of publication of application :
**18.10.89 Bulletin 89/42**

(45) Publication of the grant of the patent :
**09.09.92 Bulletin 92/37**

(84) Designated Contracting States :
**AT BE CH DE FR GB IT LI LU NL SE**

(56) References cited :
**EP-A- 263 540
CH-B-46 891 7
FR-A- 2 318 811**

(73) Proprietor : **SEFIND S.R.L.
Piazzale Metronio, 1
I-00183 Roma (IT)**

(72) Inventor : **PIETROPAOLI, Paolo
Piazzale Metronio, 1
I-00183 Roma (IT)**

(74) Representative : **Sarpi, Maurizio
Studio FERRARIO Via Collina, 36
I-00187 Roma (IT)**

Jouve, 18, rue Saint-Denis, 75001 PARIS

# Description

The object of the present invention is an automatic device to facilitate the loading and unloading of luggage in and out of an aircraft hold.

All the efforts of the designers and engineers in the field of air travel are finalized according to two main directions: to improve the aircraft and to improve the ground services which constitute an integrating and indispensable part of the air activity.

Among the ground facilities the luggages transportation to the aircraft and their settlement within aircraft hold are not disregardful with respect to the effectiveness and then to the good quality of the service.

The same should be said about the reverse operations of unloading and sorting the luggages at the end of a flight.

Such operations are usually performed by means of an elevating truck provided with an endless conveyor which carries the luggages in succession up to the aircraft hold door. At the inside of the hold in an inconvenient position due to the very limited height (which could be less than 80 cm.), two or more operators take up the luggages from the elevating conveyor and arrange them in the hold. This method implies several drawbacks such as the need for equalizing the intervention speeds of the various operators to the speed of the elevating conveyor, the luggages accumulation being consequently caused in addition to the chance of damaging the luggages and stopping the conveyor itself, the luggage being some times transferred from an operator to another by hurling it.

Although in the past some mechanical cargo loading and unloading system for use in the lower lobe compartment of an aircraft have been developed, for various reasons such systems have not been satisfactory.

EP-A-0 263 540 discloses a modular cargo loading and unloading system comprising a doorway transfer unit and a plurality of longitudinal units. Each of the units includes conveyors belts for supporting and moving cargo containers. The doorway transfer unit is mounted in the entryway of the compartment and orthogonally changes the direction of movement of cargo containers entering and leaving the compartment. The longitudinal units are serially positioned in the compartment and move cargo containers to and from their destinations in the compartment. Both the doorway transfer unit and the longitudinal units include cargo supporting conveyor belts. Such system has the disadvantage that said doorway transfer units and longitudinal units must be attached to the floor of said elongated compartment and, in spite of the use of tie-down means the assembling is quite difficult.

From FR-A- 2 318 811 it is known an automatic device for loading a lorry , said device comprising a horizontal support for an endless belt in temporary prosecution to a conventional elevating conveyor of the luggage, the purpose of which is to receive said luggage in succession, said supports being connected with said elevating conveyor by means of telescopic elements sliding perpendicularly to the elevating conveyor.

Said device cannot be used in a lower lobe compartment of an aircraft because the support with the endless belt is rigidly connected with the elevating conveyor at the end of an arm which does not allow said endless belt to stand and slide on the floor of the compartment as requested from the limited height available.

The purpose of the invention is to realize a device adapted to prevent the above drawbacks so that the arrangement of the luggages within the aircraft hold is made rational, quick and easy.

According to the invention there is provided an automatic device to facilitate the loading and unloading of the passenger luggages into and out of the door of the hold or luggage compartment of the aircraft, formed of a luggage carrying platform which supports an endless belt being telescopically movable at the end of an elevating conveyor, in a direction perpendicular to the elevating conveyor, the purpose of which being to receiving said luggage in succession, characterized by the fact that said device comprises: an outer wheeled frame adapted for travelling over the aircraft hold bottom, wherein the outer surface is wrapped up by said platform which is fastened to it; an inner frame which is bound to said elevating conveyor and is stationary within said fuselage hold in front of said hold door and a middle telescopic frame wrapped up on inner frame and slidable to extend for all its lenght forwards and rearwards of the luggage compartment, the outer frame being wrapped up on middle frame and slidable to extend for all its lenght from said middle frame forwards and rearwards of the luggage compartment; means for causing said telescopic elements to slide and carry said platform with each luggage on top of it as far as the operator located inside the aircraft hold; a proximity switch for interrupting the platform travel near the operator and a luggage presence sensing switch which controls the return of the platform to its initial position.

Still according to the invention the sliding motion of said telescopic frames is controlled by a series of rodless pistons pneumatically operated which are controlled by a logic circuit which depends on said contact sensor and on a sensor of the luggage presence on said endless conveyor of the platform.

In order to transfer each luggage from the free end of the conventional elevating conveyor to said platform a pneumatic roller is provided which is interposed between the elevator conveyor and the endless belt of the sliding platform which roller fits to contact the last roller of the elevating conveyor together with the first roller of the sliding platform endless belt. Thus the movement of the elevating conveyor is transmitted to said platform and a piece of luggage is transferred onto the platform to reach the center of the latter. As it will be explained hereinafter the platform is then disengaged from the elevating conveyor and by other means hereinafter described it can be moved towards either of the two spaces of the aircraft hold farward and rearward with respect to the hold door.

The invention will be now described with reference to the attached drawings wherein a preferred embodiment thereof is described as an illustration and not as a limitation thereof.

In the drawings:

Fig.1 is a side perspective view of a conventional elevating conveyor which is a constituent part of the device according to the invention and is approached to the luggage hold of an aircraft;

Fig.2 shows a plan view corresponding to Fig.1;

Fig.3 shows the detail of the end-less belt platform according to the invention as shown in cross section along plane III-III of Fig.2 and in an elarged scale;

Fig.4 and 5 show two views similar to figures 1 and 2, said platform being inserted into the luggage hold of the aircraft;

Fig.6 shows in an enlarged scale, the detail A of Fig.4;

Figs.7 and 8 show two views similar to Figs.1 and 2 wherein the first luggage piece is arranged on said platform within the hold;

Fig.9 is a view similar to Fig.6 and shows the motion transmission from the elevating conveyor to said platform;

Figs.10 and 11 show the sliding of the platform along the inside of the hold to reach the operator;

Figs.12 and 13 show the progressive filling of one of the two spaces of the aircraft hold starting from one end of the hold reaching the filling door.

Figs.14 and 15 show the beginning of the loading of the luggage into the second space of the hold;

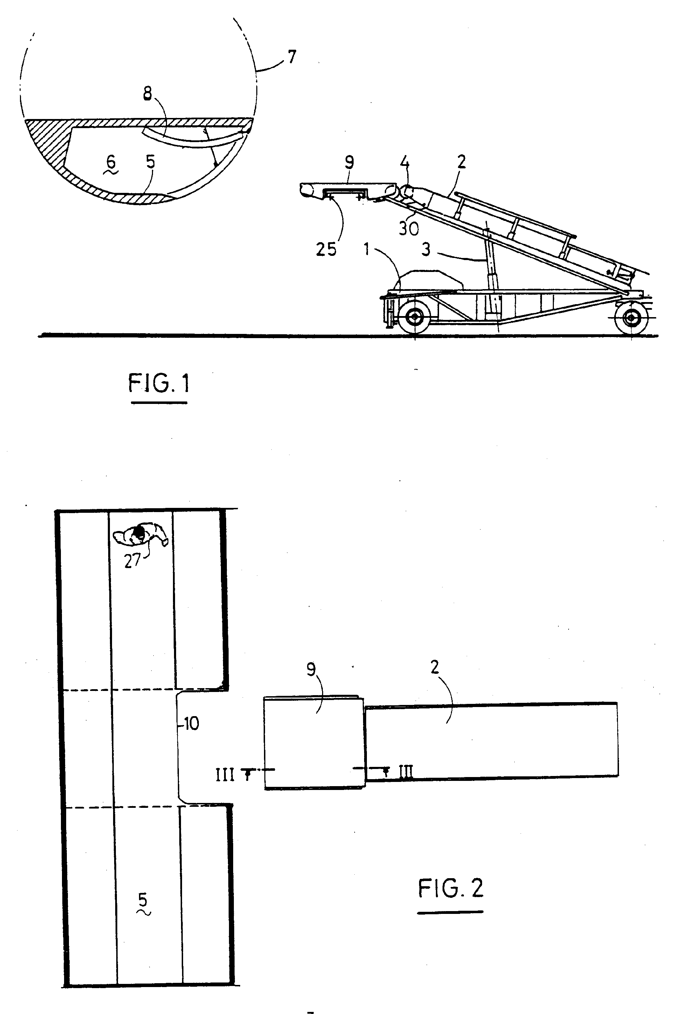

With reference to figures 1 and 2 number 1 indicates the whole of a wheeled truck, of known type, which carries an elevating belt conveyor 2 combined with an hydraulic jack 3, the purpose of which is lifting the upper roller 4 of the elevating belt conveyor up to the level of the floor 5 of the aircraft hold where the luggage 6 is loaded, which hold is located in the lower compartment of an aircraft fuselage; said hold being closed by a door 8.

The device according to the invention comprises an endless belt 9' supported by a platform 9 which is temporarily mounted in continuation to said elevating belt conveyor 2 and which has a breadth sucht that it can be fitted into the throat 10 at the level of the floor 5 of hold 6.

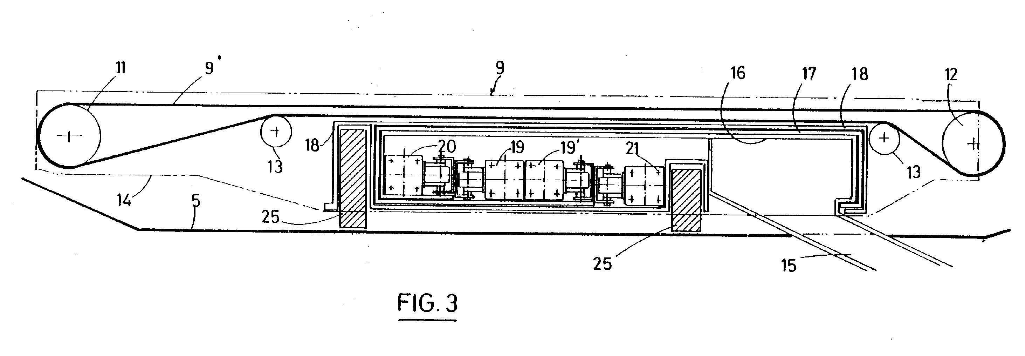

The device according to the invention is shown in detail in figure 3. The endless belt 9' of platform 9 is mounted on a pair of end rollers 11,12 and on a second pair of transmission rollers 13 which are mounted idle on the side panels 14 of platform 9 which fastened to the outermost frame 18 of a group of three telescopic frames indicated by 16,17,18 which are located underneath the endless belt 9' of platform 9.

As can be seen in figures 1, 3, 10 and 11 the inner frame 16 is firmly bound to the frame 30 of elevator truck 1 through rods 15 and therefore when platform 9 enters the loading door of the aircraft and stops therein, the frame 16 also stops and defines the moving direction of platform 9 in either directions that is rearward and forward of the aircraft.

In fact the two frames 17 and 18 are wrapped up on stationary frame 16, the frame 17 being slidably wrapped up on frame 16 while frame 18 is slidably wrapped up on frame 17. The successive stretching of frame 17 from frame 16 and of frame 18 from frame 17 is such that the three frames at the maximum of their stretching, extend from the loading door to one or the other end of the luggage compartment.

As shown in Fig.3 the outer surface of frame 18 is wrapped up by platform 9 which is fastened to it and therefore it accompanies the same along the total of its travel. It is to be noted that frame 18 is provided with wheels which run on the floor 5 of the loading compartment of the aircraft.

The displacement of platform 9 in either of the two directions is determined by the stretching of frames 17 and 18 in one or the other directions, the movement of these frames depending on a command imparted by an operator who stands within the aircraft hold and is free to move from one to the other end of the luggage compartment.

The sliding movement of said telescopic frames 17,18 (and then the translation of the platform 9 within the load space) is controlled by four pneumatic rodless pistons indicated by numbers 19, 19', 20 and 21 which are not described in detail inasmuch as they are known and can be found in the trade. The two center pistons 19,19', are associated to the intermediate frame 17, while the two side pistons 20 and 21, the sliding elements of which are each connected with the sliding movement of the contiguous center piston, are respctively associated with the inner frame 16 and with the outer frame 18. Said pistons are all controlled by an operating logics assembly which is also preferably pneumatic and determines from time to time both the travel of the platform within the load space and the two opposite directions of the same travel as it will be better explained hereinafter.

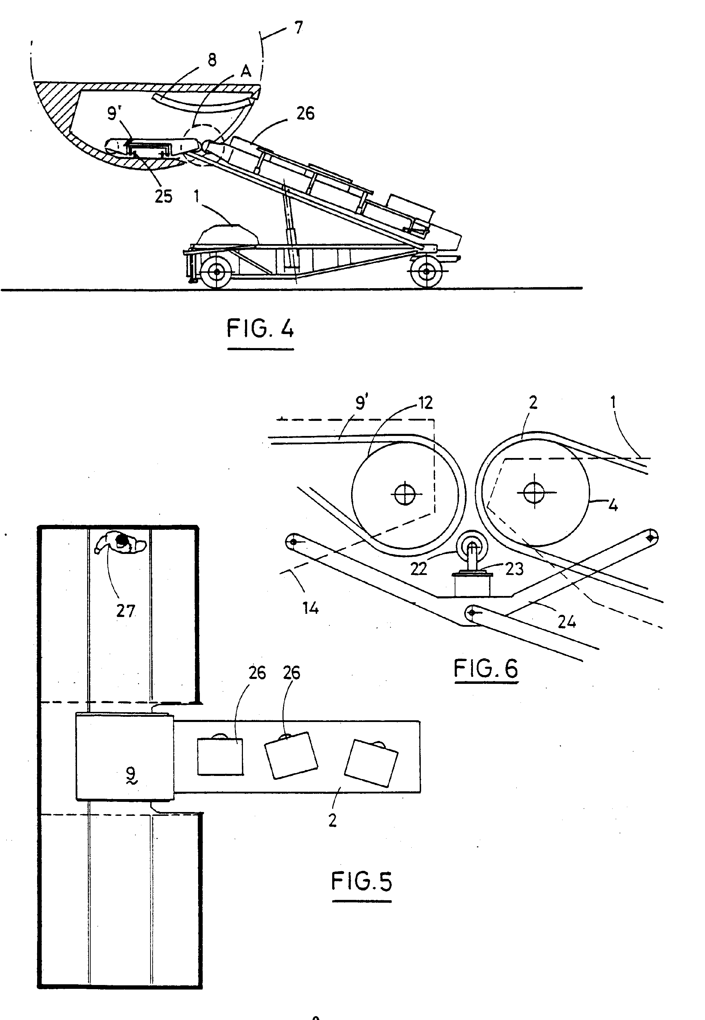

In order to transmit the movement of elevating conveyor 2 to endless belt of platform 9 the system illustrated in Fig.6 is provided. It comprises an idler roller 22 sustained by a pneumatic cylinder 23 which is mounted on arm 24.

The operation is as follows: the wheeled truck 1 with platform 9 is approached to the aircraft fuselage and the loading door 8 is opened (Fig.1 and 2). Thereafter jack 3 is actuated to bring platform 9 up to the level of the aircraft hold.

The total of the platform 9 including the package of frames 16,17 and 18 and including the battery of four pneumatic rodless pistons 19,19', 20 and 21 is then inserted into the aircraft hold so that the wheels 25 of telescopic frame 18 are laid down to mate the floor of the aircraft hold.

Subsequently a piece of luggage 26 is disposed in succession with other pieces on the elevating conveyor belt 2 which takes it to the level of the loading hold. The endless belt 9' of the platform 9 is stopped for the moment as illustrated by Fig.6.

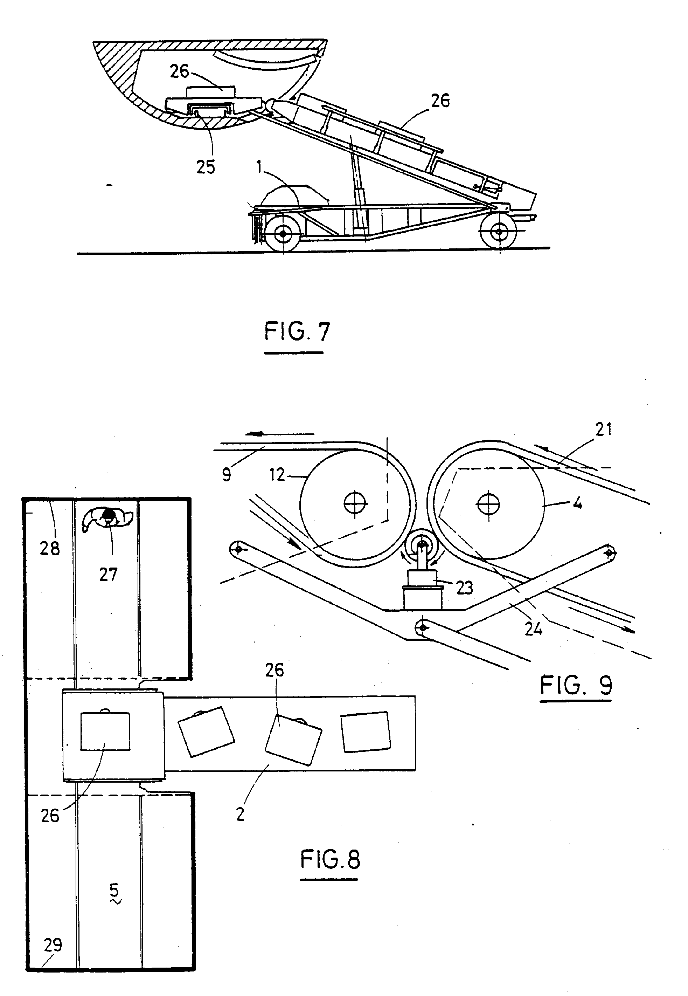

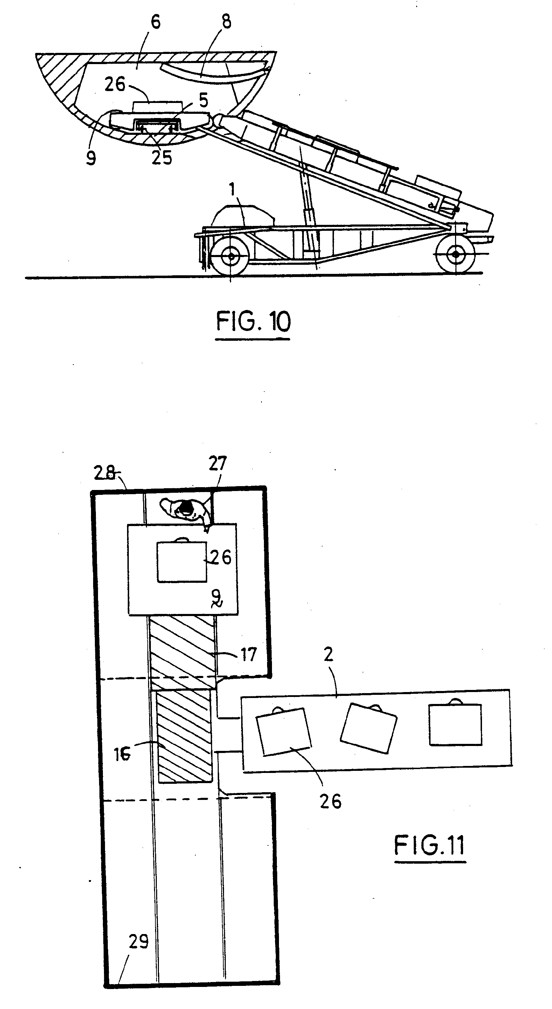

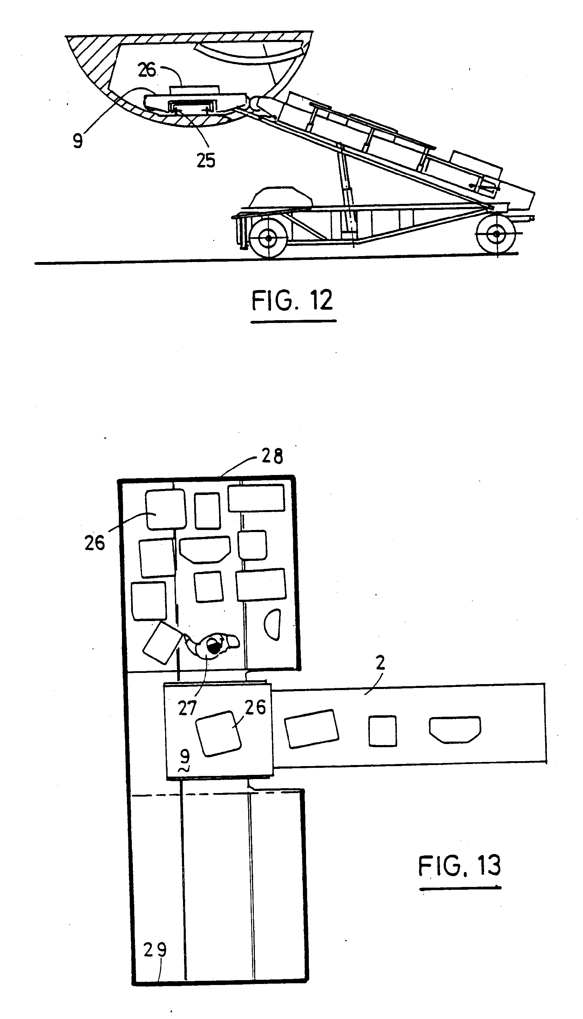

As soon as the first piece of luggage 26 has reached the summit of elevating conveyor 2, the engagement of the transmission roller 22 is obtained by means of the pneumatic cylinder 23 (Fig. 9) whereby belt 9' of platform 9 starts to run and receives the piece of luggage 26 from conveyor 2. As soon as the piece of luggage 26 reaches the center of platform 9 (Figs. 7 and 8) the assembly of conveyors 2 and 9' stops automatically and platform 9 slides along the inside of the hold ( Figs. 10 and 11 ) being actuated by pistons 19, 19', 20, 21 of Fig. 3 which determine the extension of telescopical frames 17 and 18.

When platform 9 with piece of luggage 26 has reached the operator 27 which is standing near the end wall 28 of the aircraft hold (Fig. 11) then a circuit breaker stops the sliding of the platform 9 and operator 27 lifts the piece of luggage and places it in the hold. Another load sensing circuit breaker feels the luggage taking and operates the return of the empty platform to its original position. Subsequently the cycle is repeated by starting the movement of conveyor 9' of platform 9 and by the arrival of the next luggage piece until the loading of one of the two hold spaces is completed as shown by figure 13.

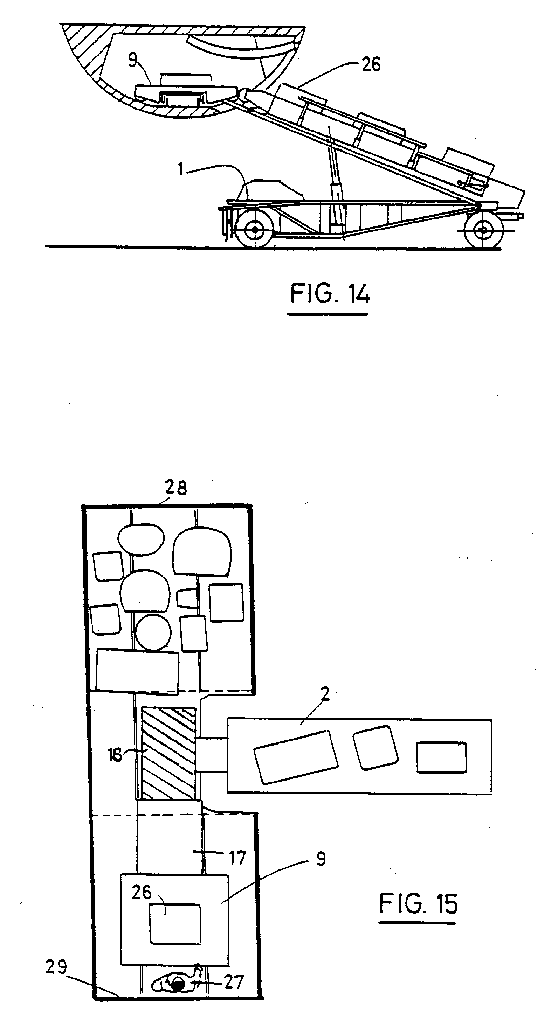

At the end of the above period the operator actuates a control which inverts the sliding travel of platform 9 along the aircraft hold and the loading of the second space is initiated, starting from the end wall 29 of the hold as shown in Fig.15. At the end of this second period, the wheeled truck 1 is withdrawn and the aircraft door 8 is closed.

The above operations in the reversed order are effected for unloading the luggage at the end of the flight.

From the above it clearly appears that the described device permits along other advantages, to "humanize" the loading and unloading work inasmuch as the frequency of loading and unloading operations is determined by operator and not by the speed of the elevator conveyor 2 as it presently occurs. Furthermore the luggage loading and unloading can be effected by a single operator.

The present invention has been illustrated and described in a preferred embodiment; however it is intended that structural variants can be added thereto without departing from the scope of the present invention as defined by the claims.

**Claims**

1) An automatic device to facilitate the loading and unloading of the passenger luggages into and out of the door of the hold or luggage compartment of the aircraft, formed of a luggage carrying platform (9) which supports an endless belt (9') being telescopically movable at the end of an elevating conveyor (2), in a direction perpendicular to the elevating conveyor, the purpose of which is to receive said luggage in succession, characterized by the fact that said device comprises: an outer wheeled frame (18) adapted for travelling over the aircraft hold bottom, wherein the outer surface is wrapped up by said platform (9) which is fastened to it; an inner frame (16) which is bound to said elevating conveyor (2) and is stationary within said fuselage hold in front of said hold door and a middle telescopic frame (17) wrapped up on said inner frame (16) and slidable to extend for all its lenght forwards and rearwards of the luggage compartment, the outer frame (18) being wrapped up on middle frame (17) and slidable to extend for all its lenght from said middle frame (17) forwards and rearwards of the luggage compartment; means (19,19',20,21) for causing said telescopic elements (16,17,18) to slide and carry said platform (9) with each luggage on top of it as far as the operator located inside the aircraft hold; a proximity switch for interrupting the platform travel near the operator and a luggage presence sensing switch which controls the return of the platform to its initial position.

2) A device according to claim 1 characterized by the fact that the stretching of middle frame (17) with respect to inner frame (16) is controlled by four pneumatic rodless pistons (19,19',20,21) which are actuated by a logical circuit controlled by a detector of a presence of a piece of luggage on the platform belt (9').

3) A device according to claims 1 and 2, characterized by the fact that said device comprises a means for controlling the movement of going and coming of the platform (9) along the luggage compartment of the aircraft which means is adapted for being controlled by the operator whereby the travel of said going and coming movement is progressively shortened and extended.

4) A device according to claims 1-3 characterized by the fact that the return movement of the empty platform (9) to the spot where a next piece of luggage is received to said platform from said elevator conveyor is controlled by a sensor of weight.

5) A device according to claims 1-4 characterized by the fact of being provided with a means for transferring each piece of luggage (26) from conventional elevating conveyor (2) to said platform (9) which means comprises a roller (22) interposed between the upper end of said elevating conveyor and the beginning of said endless belt (9'); said roller (22) being actuated by a pneumatic jack (23).

6) A device according to claims 1-5 characterized by the fact that said platform endless belt (9') is provided with a sensor of weight adapted for interrupting the movement of said endless belt as soon as said piece of luggage has reached the center of said platform within the inside of the aircraft hold.

7) A device according to claims 1-6 characterized by the fact of being provided with a control for inverting the coming and going movement of said platform along the aircraft luggage compartment whereby the two rearward and forward spaces of said compartment can be filled by the operator with passengers luggage.

8) A device according to the claims 1-7 characterized by the fact that said four rodless pistons (19,19',20,21) are pneumatically operated and laying coplanar within the space defined by said inner (16), middle (17) and outer (18) telescopic frames of which pistons two (19,19') are central with respect to the outer two (20,21) and are fastened to the middle frame (17) while the other two (20,21) are lateral and are associated respectively with the inner frame (16) and with the outer frame (18), the mobile frame of said lateral pistons being fastened to the mobile frame of the adjacent central piston.

**Patentansprüche**

1. Automatische Vorrichtung zum Erleichtern des Be- und Entladens von Fluggastgepäck durch die Klappe des Lade- oder Gepäckraums des Flugzeugs, bestehend aus einer Gepäcktragplattform (9), die ein Endlosband (9') abstützt, am Ende eines Hubförderers (2) in einer zu dem Hubförderer senkrechten Richtung teleskopartig bewegbar ist und deren Zweck es ist, nacheinander das Gepäck aufzunehmen, dadurch gekennzeichnet, daß die Vorrichtung aufweist: einen äußeren Rahmen (18) mit Rädern, der über den Boden des Flugzeugladeraums verfahrbar ist, wobei die Außenfläche von der daran befestigten Plattform (9) umschlossen ist; einen inneren Rahmen (16), der mit dem Hubförderer (2) verbunden und in dem Flugzeugrumpf-Laderaum vor der Laderaumklappe ortsfest ist; und einen mittleren Teleskoprahmen (17), der den inneren Rahmen (16) umschließt und so verschiebbar ist, daß er über seine Gesamtlänge in vorwärts- und Rückwärtsrichtung des Gepäckraums ausfahrbar ist, wobei der äußere Rahmen (18) den mittleren Rahmen (17) umschließt und so verschiebbar ist, daß er über seine Gesamtlänge von dem mittleren Rahmen (17) in Vorwärts- und Rückwärtsrichtung des Gepäckraums ausfahrbar ist; Einrichtungen (19, 19', 20, 21), die ein verschieben der Teleskopelemente (16, 17, 18) und Bewegen der Plattform (9) mit jedem darauf befindlichen Gepäckstück bis zu dem in dem Flugzeugladeraum befindlichen Bediener bewirken; einen Näherungsschalter, der die Plattformbewegung in der Nähe des Bedieners unterbricht; und einen Gepäckstückerfassungsschalter, der die Rückbewegung der Plattform in ihre Ausgangsposition steuert.

2. Vorrichtung nach Anspruch 1, dadurch gekennzeichnet, daß das Ausfahren des mittleren Rahmens (17) relativ zu dem inneren Rahmen (16) von vier pneumatischen stangenlosen Kolben (19, 19', 20, 21) gesteuert wird, die von einer Logikschaltung betätigt werden, die von einem Detektor zum Detektieren eines Gepäckstücks auf dem Plattformband (9') gesteuert wird.

3. Vorrichtung nach Anspruch 1 und 2, dadurch gekennzeichnet, daß sie eine Einrichtung zum Steuern der Hin- und Herbewegung der Plattform (9) entlang dem Gepäckraum des Flugzeugs aufweist, wobei die Einrichtung von dem Bediener steuerbar ist, so daß die Strecke der Hin- und Herbewegung progressiv verkürzt und verlängert wird.

4. Vorrichtung nach den Ansprüchen 1-3, dadurch gekennzeichnet, daß die Rückbewegung der leeren Plattform (9) zu der Stelle, an der ein nächstfolgendes Gepäckstück von dem Hubförderer auf der Plattform empfangen wird, von einem Gewichtssensor gesteuert wird.

5. Vorrichtung nach den Ansprüchen 1-4, dadurch gekennzeichnet, daß sie eine Einrichtung zum Überführen jedes Gepäckstücks (26) von dem konventionellen Hubförderer (2) auf die Plattform (9) aufweist, wobei die Einrichtung eine Rolle (22) hat, die zwischen dem Oberende des Hubförderers und dem Anfang des Endlosbands (9') angeordnet ist; wobei die Rolle (22) von einem Druckluftzylinder (23) betätigt wird.

6. Vorrichtung nach den Ansprüchen 1-5, dadurch gekennzeichnet, daß das Endlosband (9') der Plattform einen Gewichtssensor aufweist, der so ausgebildet ist, daß er die Bewegung des Endlosbands unterbricht, sobald das Gepäckstück die Mitte der Plattform im Inneren des Flugzeugladeraums erreicht hat.

**7.** Vorrichtung nach den Ansprüchen 1-6, dadurch gekennzeichnet, daß sie eine Steuereinrichtung zum Umkehren der Hin- und Herbewegung der Plattform entlang dem Flugzeuggepäckraum aufweist, so daß die beiden hinteren und vorderen Räume des Gepäckraums von dem Bediener mit Fluggastgepäck gefüllt werden können.

**8.** Vorrichtung nach den Ansprüchen 1-7, dadurch gekennzeichnet, daß die vier stangenlosen Kolben (19, 19', 20, 21) pneumatisch betätigbar sind und in dem von dem inneren (16), mittleren (17) und äußeren (18) Teleskoprahmen definierten Raum koplanar liegen, wobei zwei (19, 19') der Kolben relativ zu den beiden äußeren Kolben (20, 21) zentral angeordnet und an dem mittleren Rahmen (17) befestigt sind, während die beiden anderen Kolben (20, 21) seitlich angeordnet und dem inneren Rahmen (16) bzw. dem äußeren Rahmen (18) zugeordnet sind, wobei der bewegliche Rahmen der seitlichen Kolben an dem beweglichen Rahmen des benachbarten zentralen Kolbens befestigt ist.

## Revendications

1 - Un dispositif automatique pour faciliter le chargement et le déchargement des bagages des passagers par la porte de la soute ou du compartiment à bagages de l'avion, constitué d'une plate-forme porte-bagages (9) qui supporte une courroie sans fin (9') en étant mobile de manière télescopique à l'extrémité d'un transporteur élévateur (2), dans une direction perpendiculaire au transporteur élévateur, dont le but est de recevoir lesdits bagages en succession, caractérisé par le fait que ledit dispositif comprend : un bâti externe à roues (18) prévu pour se déplacer sur le fond de la soute de l'avion, dans lequel la surface externe est recouverte par ladite plate-forme (9) qui lui est fixée ; un bâti interne (16) qui est relié audit convoyeur élévateur (2) et est fixe à l'intérieur de ladite soute du fuselage en face de ladite porte de la soute et un bâti télescopique médian (17) recouvrant ledit bâti interne (16) et pouvant coulisser pour s'étendre sur toute sa longueur vers l'avant et vers l'arrière du compartiment à bagages, le bâti externe (18) recouvrant le bâti médian (17) et pouvant coulisser pour s'étendre sur toute sa longueur depuis ledit bâti médian (17) vers l'avant et vers l'arrière du compartiment à bagages ; des moyens (19, 19', 20, 21) pour amener lesdits éléments télescopiques (16, 17, 18) à coulisser et à transporter ladite plate-forme (9), avec chaque fois des bagages sur son dessus, aussi loin que se tient l'opérateur placé à l'intérieur de la soute de l'avion ; un commutateur de proximité pour interrompre le déplacement de la plate-forme près de l'opérateur et un commutateur de détection de présence de bagages qui commande le retour de la plate-forme vers sa position initiale.

2 - Un dispositif selon la revendication 1, caractérisé par le fait que l'étirage du bâti médian (17) par rapport au bâti interne (16) est commandé par quatre pistons pneumatiques sans fin (19, 19', 20, 21) qui sont actionnés par un circuit logique commandé par un détecteur de la présence d'un bagage sur la courroie (9') de la plate-forme.

3 - Un dispositif selon les revendications 1 et 2, caractérisé par le fait que ledit dispositif comprend un moyen pour commander le mouvement d'allées et venues de la plate-forme (9) le long du compartiment à bagages de l'avion, ce moyen étant prévu pour être commandé par l'opérateur de sorte que le déplacement dudit mouvement d'allées et venues est progressivement raccourci et allongé.

4 - Un dispositif selon les revendications 1-3, caractérisé par le fait que le mouvement de retour de la plate-forme vide (9) vers l'endroit où un bagage suivant est reçu sur ladite plate-forme depuis ledit convoyeur élévateur est commandé par un détecteur de poids.

5 - Un dispositif selon les revendications 1-4, caractérisé par le fait de prévoir un moyen pour transférer chaque bagage (26) depuis un convoyeur élévateur classique (2) vers ladite plate-forme (9), ce moyen comprenant un galet (22) interposé entre l'extrémité supérieure dudit convoyeur élévateur et le début de ladite courroie sans fin (9') ; ledit galet (22) étant actionné par un vérin pneumatique (23).

6 - Un dispositif selon les revendications 1-5, caractérisé par le fait que ladite courroie sans fin (9') de la plate-forme est munie d'un détecteur de poids prévu pour interrompre le mouvement de ladite courroie sans fin dès que ledit bagage a atteint le centre de ladite plate-forme à l'intérieur de la soute de l'avion.

7 - Un dispositif selon les revendications 1-6, caractérisé par le fait de prévoir une commande pour inverser le mouvement de venues et d'allées de ladite plate-forme le long du compartiment à bagages de l'avion de sorte que les deux espaces avant et arrière dudit compartiment peuvent être remplis par l'opérateur avec les bagages des passagers.

8 - Un dispositif selon les revendications 1-7, caractérisé par le fait que lesdits quatre pistons sans tige (19, 19', 20, 21) sont actionnés pneumatiquement et sont coplanaires à l'intérieur de l'espace défini par lesdits bâtis télescopiques interne (16), médian (17) et externe (18), deux (19, 19') des pistons étant centraux par rapport aux deux externes (20, 21) et étant fixés au bâti médian (17) tandis que les deux autres (20, 21) sont latéraux et sont respectivement associés au bâti interne (16) et au bâti externe (18), le bâti mobile desdits pistons latéraux étant fixé au bâti mobile du piston central adjacent.

FIG.1

FIG.2

FIG. 3

EP 0 336 940 B1

FIG. 4

FIG.6

FIG.5

FIG. 7

FIG.8

FIG. 9

FIG. 10

FIG.11

FIG. 12

FIG. 13

FIG. 14

FIG. 15